# EUROPEAN PATENT SPECIFICATION

(11) **EP 2 375 043 B1**
(45) Date of publication and mention of the grant of the patent: **28.08.2024**
(21) Application number: 11160127.4
(22) Date of filing: 29.03.2011
(51) Int. Cl.: F02D 41/34, F02D 41/00, F02D 41/10

(54) **Fuel injection control system and program**
Brennstoffeinspritzungssteuersystem und Programm
Système et programme de commande d'injection de carburant

(30) Priority: 31.03.2010 JP 2010084648
(43) Date of publication of application: 12.10.2011
(73) Proprietor: HONDA MOTOR CO., LTD., Tokyo 107-8556 (JP)
(72) Inventor: Asada, Yukihiro, Wako-shi Saitama Saitama 351-0193 (JP); Takeda, Toru, Wako-shi Saitama Saitama 351-0193 (JP); Machida, Kenichi, Wako-shi Saitama Saitama 351-0193 (JP)
(74) Representative: Fioravanti, Corrado

(56) References cited:
- JP-A- S6 296 747
- JP-A- S60 122 238
- US-A- 4 800 860
- US-A- 4 811 231
- US-A- 4 987 889

## Description

The present invention relates to a fuel injection control system and a program for controlling a timing of injection of fuel to be injected into the air taken in an engine.

For a fuel injection system of an engine, control in which a main injection is made at a compression top dead center with a preliminary injection made before opening the intake valve has been heretofore proposed for the purpose of inhibiting the deterioration of fuel economy and exhaust gas emission and facilitating the vaporizing of fuel for the preliminary injection and the mixing of the fuel for the preliminary injection with the fresh air. An example of the technical idea has been shown in Japanese Patent Application Publication No. 2006-342781.

As far as the technical idea described in the above-cited patent document is concerned, it is possible to inhibit the deterioration of the fuel economy and the emission. However, in such as a case where the driver accelerates by opening the throttle between a preliminary injection and a main injection, it is difficult at the timing of the main injection to make an amount of injection meet the drivability, such as acceleration, which a driver expects.

Patent document JP S60 122238 A discloses a fuel injection control system comprising:
a throttle valve opening detecting part for detecting opening values of a throttle valve for adjusting an amount of air taken into an engine;
a fuel injector for injecting fuel into the air taken into the engine;
a crank angle detecting part for detecting a rotational angle value of a crankshaft of the engine;
a fuel injection controller for controlling the fuel injector on a basis of the detected opening values of the throttle valve and the detected rotational angle value of the crankshaft, wherein the fuel injection controller:
   judges opening and closing states of an intake valve, which is provided to the engine and configured to cyclically open and close, on a basis of the rotational angle value of the crankshaft;
   judges that fuel injection is in a fuel economy prioritized condition and controls the fuel injector, thereby causing the fuel injector to inject the fuel at a first timing following closing of the intake valve, in a case where a rate of change in the detected opening values of the throttle valve falls within a predetermined range, or in a case where the rate of change in the opening values thereof falls outside the predetermined range and there is a decrease between the opening values of the throttle valve; and
      judges that the fuel injection is in an acceleration transition condition and controls the fuel injector, thereby causing the fuel injector to inject the fuel at a second timing preceding opening of the intake valve, or both at the first timing and sometime during the opening of the intake valve, in a case where the rate of change in the detected opening values of the throttle valve falls outside the predetermined range and there is an increase between the opening values of the throttle valve, and
the second timing is a timing later than the first timing in an interval of time from the closing of the intake valve to a subsequent opening of the intake valve.

Another fuel injection system is disclosed in patent document US 4 987 889 A.

A fuel injection timing controller is known from patent document JP S62 96747 A.

The present invention has been made with such a conventional problem taken into consideration. An object of the present invention is to provide a fuel injection control system and a program for achieving a fuel injection for enhancing both fuel economy and drivability.

To achieve the above object, an aspect of the invention as recited in claim 1 provides a fuel injection control system comprising: a throttle valve opening detecting part for detecting opening values of a throttle valve for adjusting an amount of air taken into an engine; a fuel injector for injecting fuel into the air taken into the engine; a crank angle detecting part for detecting a rotational angle value of a crankshaft of the engine; a fuel injection controller for controlling the fuel injector on a basis of the detected opening values of the throttle valve and the detected rotational angle value of the crankshaft, wherein the fuel injection controller is so configured to: judge opening and closing states of an intake valve, which is provided to the engine and is configured to cyclically open and close, on a basis of the rotational angle value of the crankshaft; judges that fuel injection is in a fuel economy prioritized condition and controls the fuel injector, thereby the fuel injector injects the fuel at a first timing following closing of the intake valve, in a case where a rate of change in the detected opening values of the throttle valve falls within a predetermined range, or in a case where the rate of change in the opening values thereof falls outside the predetermined range and there is a decrease between the opening values of the throttle valve; and judge that the fuel injection is in an acceleration transition condition and control the fuel injector, thereby the fuel injector injects the fuel at a second timing preceding opening of the intake valve, or both at the first timing and sometime during the opening of the intake valve, in a case where the rate of change in the detected opening values of the throttle valve falls outside the predetermined range and there is an increase between the opening values of the throttle valve, and
the second timing is a timing later than the first timing in an interval of time from the closing of the intake valve to a subsequent opening of the intake valve, wherein one cycle is defined as an interval of time covering four steps which include an intake step, a compression step, a combustion step, and an exhaust step of the engine, the system further comprising a change rate calculator for, in each cycle, calculating the rate of change in the opening values of the throttle valve on a basis of the opening values of the throttle valve which are detected by the throttle valve opening detecting part.

An aspect of the invention as recited in claim 2 provides the fuel injection control system according to claim 1, wherein once judging that the fuel injection is switched from the fuel economy prioritized condition to the acceleration transition condition, the fuel injection controller controls the fuel injector, thereby causing the timing of the fuel injection in the interval of time from the closing of the intake valve to the opening of the intake valve to be gradually delayed to the second timing.

An aspect of the invention as recited in claim 3 provides the fuel injection control system according to claim 2, wherein the fuel injection controller gradually delays the timing of the fuel injection in the interval of time from the closing of the intake valve to the opening of the intake valve by extending time by which the timing of the current fuel injection is made later than the timing of the preceding fuel injection in accordance with the rate of change in the opening values of the throttle valve.

An aspect of the invention as recited in claim 4 provides the fuel injection control system according to any one of claims 1 to 3, wherein once judging that the fuel injection returns to the fuel economy prioritized condition from the acceleration transition condition, the fuel injection controller controls the fuel injector, thereby causing the timing of the fuel injection in the interval of time from the closing of the intake valve to the opening of the intake valve to be gradually advanced to return to the first timing.

An aspect of the invention as recited in claim 5 provides the fuel injection control system according to claim 4, wherein the fuel injection controller gradually advances the timing of the fuel injection in the interval of time from the closing of the intake valve to the opening of the intake valve by shortening time by which the timing of the current fuel injection is made earlier than the timing of the preceding fuel injection in accordance with the rate of change in the opening values of the throttle valve.

An aspect of the invention as recited in claim 6 provides the fuel injection control system according to any one of claims 1 to 5, wherein while in the acceleration transition condition, if the fuel injection controller judges during the opening of the intake valve that the throttle valve is in the opening state on a basis of the detected opening values of the throttle valve, the fuel injection controller controls the fuel injector so that the fuel injector additionally injects the fuel during the opening of the intake valve.

An aspect of the invention as recited in claim 7 provides the fuel injection control system according to claim 6, wherein the fuel injection controller causes an amount of fuel to be injected during the opening of the intake valve, the amount corresponding to a difference between one of two opening values and an opening value which is detected when the throttle valve is judged as being in the opening state, the two opening values including: an opening value which is the largest among the opening values used to calculate the rate of change in the opening values of the throttle valve; and an opening value which is detected when the fuel injection is judged as being in the acceleration condition.

To achieve the above object, an aspect of the invention as recited in claim 8 provides a program causing a computer to function as a fuel injection controller, the system comprising: a throttle valve opening detecting part for detecting opening values of a throttle valve for adjusting an amount of air taken into an engine; a fuel injector for injecting fuel into the air taken into the engine; and a crank angle detecting part for detecting a rotational angle value of a crankshaft of the engine, the fuel injection controller configured to control the fuel injector on a basis of the detected opening values of the throttle valve and the detected rotational angle value of the crankshaft, wherein the fuel injection controller: judges opening and closing states of an intake valve, which is provided to the engine and configured to cyclically open and close, on a basis of the rotational angle value of the crankshaft; judges that fuel injection is in a fuel economy prioritized condition and controls the fuel injector, thereby causing the fuel injector to inject the fuel at a first timing following closing of the intake valve, in a case where a rate of change in the detected opening values of the throttle valve falls within a predetermined range, or in a case where the rate of change in the opening values thereof falls outside the predetermined range and there is a decrease between the opening values of the throttle valve; and judges that the fuel injection is in an acceleration transition condition and controls the fuel injector, thereby causing the fuel injector to inject the fuel at a second timing preceding opening of the intake valve, or both at the first timing and sometime during the opening of the intake valve, in a case where the rate of change in the detected opening values of the throttle valve falls outside the predetermined range and there is an increase between the opening values of the throttle valve, and the second timing is a timing later than the first timing in an interval of time from the first timing to the opening of the intake valve,
wherein one cycle is defined as an interval of time covering four steps which include a compression step, a combustion step, an exhaust step, and an intake step of the engine,
the system further comprising a change rate calculator for, in each cycle, calculating the rate of change in the opening values of the throttle valve on a basis of the opening values of the throttle valve which are detected by the throttle valve opening detecting part.

According to the invention as recited in claims 1 and 8, the fuel is injected at the first timing following the closing of the intake valve while in the fuel economy prioritized condition; and the fuel is injected at the second timing preceding the opening of the intake valve, or both at the first timing and sometime during the opening of the intake valve (36) while in the acceleration transition condition. For this reason, it is possible to achieve the fuel injection for enhancing both fuel economy and drivability.

According to the invention as recited in claim 2, the timing of the fuel injection is gradually delayed to be closer to the second timing from the first timing, when a switch is made from the fuel economy prioritized condition to the acceleration transition condition. For this reason, the torque does not increase immediately, and the drivability can be enhanced further. In addition, the fuel economy can be enhanced, because the timing of the fuel injection becomes gradually closer to the second timing.

According to the invention as recited in claim 3, the time by which to delay the injection timing can be gradually changed in response to the driver's operation of the throttle grip. For this reason, the drivability is further enhanced.

According to the invention as recited in claim 4, the timing of the fuel injection is gradually advanced to make the timing of the fuel injection closer to the first timing, when a switch is made from the acceleration transition condition to the fuel economy prioritized condition. For this reason, the torque does not decrease immediately, and the drivability can be further enhanced.

According to the invention as recited in claim 5, the time by which to advance the injection timing can be gradually changed in response to the driver's operation of the throttle grip. For this reason, the drivability is further enhanced.

According to the invention as recited in claim 6, the fuel is additionally injected during the opening of the intake valve, in a case where the throttle valve is open during the opening of the intake valve. For this reason, the torque is inhibited from decreasing, and the drivability is enhanced.

According to the invention as recited in claim 7, the fuel is injected by an amount corresponding to the amount of air having flown into the combustion chamber due to the opening of the throttle valve during the opening of the intake valve. For this reason, it is possible to further inhibit the decrease in the torque, and the drivability is enhanced.

Further characteristics and advantages of the invention will become apparent from the following description with reference to the drawings wherein:
Fig. 1 is a schematic configuration diagram of a fuel injection control system according to the present invention;
Fig. 2 is a flowchart showing an operation of a controller shown in Fig. 1;
Fig. 3 is a flowchart showing an operation of the controller shown in Fig. 1; and
Fig. 4 is a diagram showing the timing of fuel injection during the closing of an intake valve in each cycle.

Referring to the attached drawings, detailed descriptions will be hereinbelow provided for a fuel injection control system and a program for causing the fuel injection control system to perform its functions according to the present invention by citing preferable embodiments thereof.

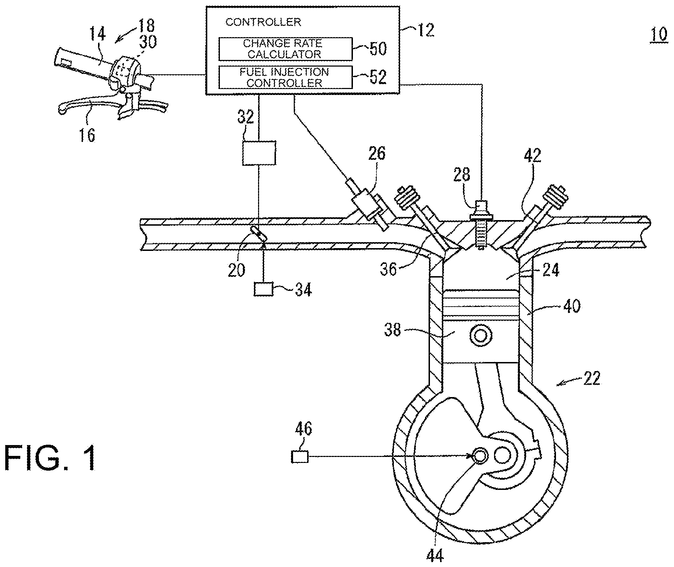

Fig. 1 is a schematic configuration diagram of a fuel injection control system 10 according to the present invention. The fuel injection control system 10 includes: a controller 12 such as an ECU (Engine Control Unit); a handlebar 18 including a throttle grip 14 and a brake lever 16; a throttle valve 20 provided in an air intake pipeline; an engine 22; an injector (fuel injector) 26 for injecting fuel into the air taken in a combustion chamber 24 of the engine 22; and an ignition plug 28 for igniting an air-fuel mixture in the combustion chamber 24 of the engine 22.

The throttle grip 14 has a structure which is capable of being rotated by a driver. A grip opening detecting part 30 detects opening values of the throttle grip 14. The driver rotates the throttle grip 14 in an opening direction when wishing acceleration, and rotates the throttle grip 14 in a closing direction when wishing deceleration. The controller 12 controls the opening and closing of the throttle valve 20 through an actuator 32 in response to the opening values detected by the grip opening detecting part 30. A throttle valve opening detecting part 34 detects opening values of the throttle valve 20. The controller 12 controls the throttle valve 20 so that the opening values of the throttle valve 20 can become larger as the opening values detected by the grip opening detecting part 30 becomes larger. The throttle valve 20 is a valve for adjusting the amount of air taken into the combustion chamber.

The injector 26 generates the air-fuel mixture by injecting the fuel to the air which has been taken in through the throttle valve 20 provided in the air intake pipeline. The generated air-fuel mixture flows into the combustion chamber 24 of the engine 22, is ignited by the ignition plug 28, and then is exploded. The engine 22 converts the explosion energy to a driving force.

Here, brief descriptions will be provided for how the engine 22 operates. While an intake valve 36 of the engine 22 is being opened, the generated air-fuel mixture flows into the combustion chamber 24 (in an intake step). A piston 38 performs upward and downward reciprocating movements in a cylinder 40. After the air-fuel mixture flows into the combustion chamber 24, the air-fuel mixture in the combustion chamber 24 is compressed as the piston 38 is lifted up (in a compression step). Thereafter, the ignition plug 28 ignites the compressed air-fuel mixture, and the air-fuel mixture is accordingly exploded, whereby the piston 38 descends while accelerated (in a combustion step). Once the piston 38 is lifted up again, an exhaust valve 42 is opened, and the combustion gas (exhaust gas) existing in the combustion chamber 24 is discharged (in a discharge step). The engine 22 repeats this series of four steps; the intake step, the compression step, the combustion step, and the discharge step.

The opening and closing of each of the intake valve 36 and the exhaust valve 42 is cyclically performed by the rotation of an unillustrated camshaft. The camshaft and a crankshaft 44 are connected together by an unillustrated timing belt. For this reason, as the piston 38 performs the upward and downward reciprocation movements, the crankshaft 44 rotates, and the rotation of the crankshaft 44 is transmitted to the camshaft through the timing belt, whereby the camshaft rotates. By this, the timing of the opening or closing of each of the intake valve 36 and the exhaust valve 42 depends on a rotational angle value of the crankshaft 44. A crank angle detecting part 46 detects the rotational angle value of the crankshaft.

The controller 12 includes: a change rate calculator 50 for calculating a rate of change in the opening values of the throttle valve 20 which are detected by the throttle valve opening detecting part 34; and a fuel injection controller 52 for controlling the fuel injection of the injector 26. One cycle is defined as an interval of time covering four steps which include the compression step, the combustion step, the exhaust step, and the intake step. In each cycle, the change rate calculator 50 calculates the rate of change in the opening values on the basis of the detected opening values of the throttle valve 20. The fuel injection controller 52 controls the injector 26, thereby causing the injector 26 to inject the fuel, the control made on the basis of the detected opening values of the throttle valve 20 and the detected rotational angle value of the crankshaft 44.

Specifically, the controller 12 controls the time (timing) at which the injector 26 injects the fuel, and a length of time for which the injector 26 injects the fuel. The time of the fuel injection (the timing of the fuel injection) mean the timing at which the fuel injection starts. In this respect, the state of fuel atomization varies depending on the timing of fuel injection, and the state of the air-fuel mixture varies accordingly. This state of the air-fuel mixture affects the fuel efficiency and the torque produced by the engine 22. For this reason, the fuel injection controller 52 controls the timing of the fuel injection for the purpose of enhancing the fuel economy and the drivability. Incidentally, a computer functions as the controller 12 according to this embodiment by reading a program recorded in an illustrated recording medium.

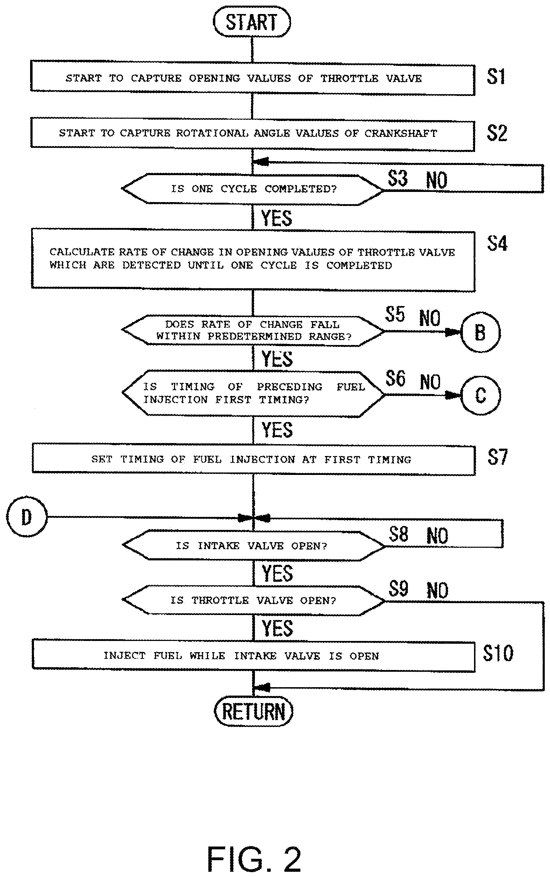

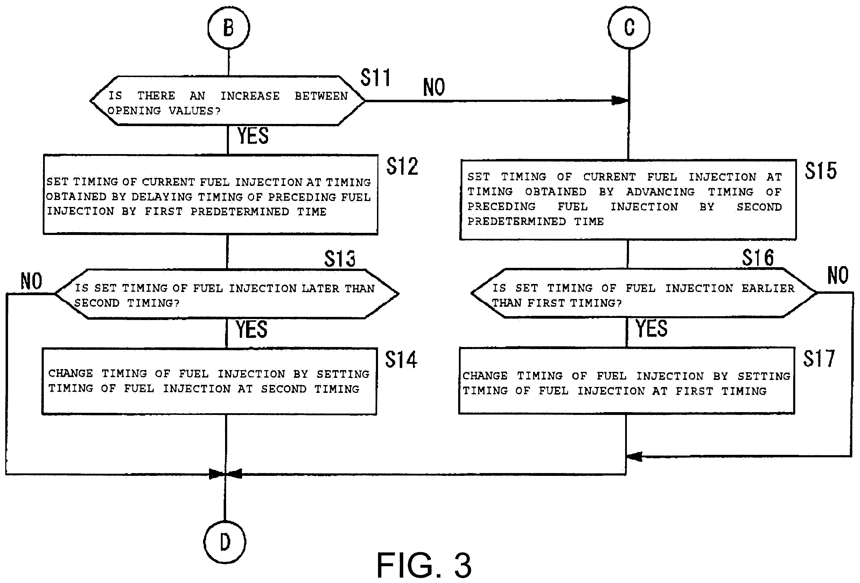

Next, descriptions will be provided for the operation of the controller 12 in accordance with the flowcharts shown in Figs. 2 and 3. The controller 12 starts to capture the opening values of the throttle valve 20 which are detected by the throttle valve opening detecting part 34 and the rotational angle values of the crankshaft 44 which are detected by the crank angle detecting part 46 (in steps S1 and S2 in Fig. 2). The throttle valve opening detecting part 34 and the crank angle detecting part 46 perform their respective detections in a certain cycle. For this reason, after steps S1 and S2, the controller 12 continues capturing values respectively detected by the throttle valve opening detecting part 34 and the crank angle detecting part 46, although not specifically described. Here, the certain cycle means a cycle less than the above-mentioned one cycle.

Subsequently, it is judged whether or not the above-mentioned one cycle has been completed (in step S3). In this embodiment, one cycle is defined as an interval of time from the closing of the intake valve 36 through the next closing of the intake valve 36. In other words, one cycle is defined as including the four steps: the compression step, the combustion step, the exhaust step, and the intake step. As described above, the judgment on the opening and closing of the intake valve 36 made from the rotational angle of the crankshaft 44. Once the one cycle is completed, the operation proceeds to the next cycle.

If the one cycle is judged as not having been completed yet in step S3, the operation stays in step S3 until the one cycle is completed. If the one cycle is judged as having been completed, the change rate calculator 50 calculates the rate of change in the opening values of the throttle valve 20 which are detected until the one cycle is completed (in step S4). In other words, the change rate calculator 50 calculates the rate of change in the opening values of the throttle valve 20 which are detected in the one cycle. In this respect, the rate of change may be calculated from the smallest opening value and the largest opening value among the opening values which are detected in the one cycle. Instead, the rate of change may be calculated from an opening value which is detected for the first time and an opening value which is detected for the last time in the one cycle.

Thereafter, the fuel injection controller 52 judges whether or not the calculated rate of change in the opening values of the throttle valve 20 falls within a predetermined range (in step S5). If the rate of change in the opening values of the throttle valve 20 falls within the predetermined range, it may be considered that the driver fixes the throttle grip 14 in order to keep the speed almost constant, because the change in the opening values of the throttle grip 14 is small. On the other hand, if the rate of change in the opening values of throttle valve 20 falls outside the predetermined range, it may be considered that the driver operates the throttle grip 14 in the rotational direction in order to change the speed for acceleration or deceleration, because the rate of change in the opening values of throttle grip 14 is large.

If having judged in step S5 that the rate of change in the opening values falls within the predetermined range, the fuel injection controller 52 judges that the fuel injection is in a fuel economy prioritized condition. In this case, the operation proceeds to step S6, where the fuel injection controller 52 judges whether or not the timing of the fuel injection in the preceding cycle is a first timing following the closing of the intake valve 36. In step S6, if having judged that the timing of the fuel injection in the preceding cycle is the first timing, the fuel injection controller 52 sets the timing of the fuel injection in the current cycle at the first timing (in step S7). The fuel injection controller 52 controls the injector 26 so that the fuel can be injected at the set timing. Thereby, while in the fuel economy prioritized condition, the fuel can be injected at the timing of the injection which achieves a better fuel economy.

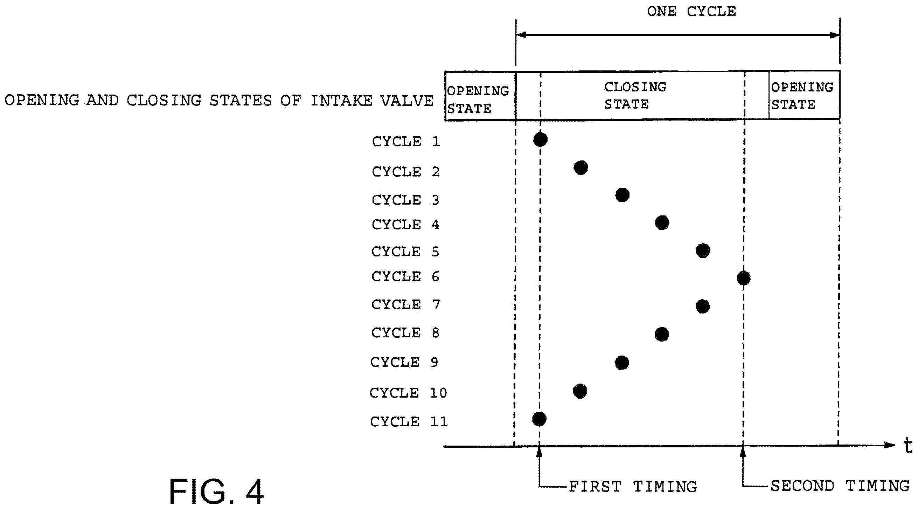

Fig. 4 is a diagram showing the timing of the fuel injection during the closing of the intake valve 36 in each cycle. As shown in Fig. 4, one cycle is defined as an interval of time from the closing of the intake valve 36 through the next closing of the intake valve 36. The first timing is a timing immediately after the closing of the intake valve 36, specifically, a timing predetermined time after the closing of the intake valve 36. Incidentally, any timing of the injection may be set at the first timing as far as the timing enables a better fuel economy.

In addition, a second timing is a timing which comes later than the first timing in the interval of time from the closing of the intake valve 36 through the opening of the intake valve 36, specifically, a timing immediately before the opening of the intake valve 36. The timing immediately before the opening of the intake valve 36 means a timing predetermined time before the opening of the intake valve 36. It should be noted that the second timing is the timing at which the torque of the engine 22, which is produced by the explosion of the air-fuel mixture, becomes stronger. Any timing may be set as the second timing as far as the vehicle body is easy to accelerate at the timing. The injection timing which enables the better fuel economy and the injection timing which enhances the drivability are incompatible with each other. The enhancement of the fuel economy deteriorates the drivability, and the enhancement of the drivability deteriorates the fuel economy. Black dots shown in Fig. 4 indicate the timing of the fuel injection in each cycle. In Cycle 1, the timing of the fuel injection is set at the first timing.

Subsequently, the fuel injection controller 52 judges whether or not the intake valve 36 is currently open (in step S8). If the fuel injection controller 52 judges, in step S8, that the intake valve 36 is not open, the operation stays in step S8 until the intake valve 36 becomes open. If the fuel injection controller 52 judges that the intake valve 36 is open, the operation proceeds to step S9.

After proceeding to step S9, the fuel injection controller 52 judges whether or not the throttle valve 20 is open on the basis of the opening values detected by the throttle valve opening detecting part 34. If the fuel injection controller 52 judges in step S9 that the throttle valve 20 is not open, the operation returns to step S1. If the fuel injection controller 52 judges in step S9 that the throttle valve 20 is open, the operation proceeds to step S10.

After proceeding to step 10, the fuel injection controller 52 controls the injector 26 so that the injector 26 can inject the fuel during the opening of the intake valve 36, and the operation returns to step S1. The timing of the fuel injection may be any timing during the opening of the intake valve 36 in the current cycle. In a case where the throttle valve 20 is open during the opening of the intake valve 36, more of the air flows into the combustion chamber 24, so that the density of the fuel included in the air-fuel mixture becomes lower. In this case, the torque of the engine 22 which is produced by the explosion of the air-fuel mixture becomes smaller. To avoid this, the fuel injection controller 52 increases the density of the fuel by injecting more fuel. In this respect, the amount of fuel to be injected may be determined from the amount of air additionally having flown into the combustion chamber.

For example, an amount of fuel may be injected which corresponds to the difference between one of the following three opening values and an opening value detected when the throttle valve 20 is judged as being in the opening state. This makes it possible to inject the amount of fuel which corresponds to the air flowing into the combustion chamber 24 during the opening of the intake valve 36. Accordingly, the reduction in the torque can be prevented, and the drivability is enhanced. The three opening values include: an opening value which is the largest among the opening values used to calculate the rate of change in the opening values of the throttle valve; an opening value which is the largest among the opening values detected in the preceding cycle; and an opening value detected when the fuel injection is judged as being in an acceleration transition condition, which will be described later.

On the other hand, if the fuel injection controller 52 judges in step S5 that the rate of change in the opening values of the throttle valve 20 does not fall within the predetermined range (judges that the rate of change falls outside the predetermined range), the driver operates the throttle grip 14 for either acceleration or deceleration. Therefore, in order to judge whether the driver operates the throttle grip 14 for acceleration or deceleration, the fuel injection controller 52 judges whether or not there is an increase between the opening values of the throttle valve 20 (in step S11 in Fig. 3). This judgment on whether or not there is an increase between the opening values of the throttle valve 20 may be made, for example, by subtracting an opening value of a previous detection from an opening value of an immediately previous detection among the opening values used to calculate the rate of change in the opening values. Otherwise, the judgment on whether or not there is an increase between the opening values of the throttle valve 20 may be made by subtracting an opening value of the first detection from an opening value of the last detection among the opening values detected in the previous cycle. In a case where the driver operates the throttle grip 14 for acceleration, there is an increase between the opening values. In a case where the driver operates the throttle grip 14 for deceleration, there is a decrease between the opening values.

If having judged in step S11 that the there is a decrease between the opening values, the fuel injection controller 52 judges that the fuel injection is in the fuel economy prioritized condition, and the operation proceeds to step S15. On the other hand, if having judged in step S11 that there is an increase between the opening values, the fuel injection controller 52 judges that the fuel injection is in the acceleration transition condition, and the operation proceeds to step S12. In step S12, the fuel injection controller 52 sets the timing of the fuel injection in the current cycle at a timing obtained by delaying, by first predetermined time, the timing of the fuel injection at which the fuel is injected during the closing of the intake valve 36 in the preceding cycle. The fuel injection controller 52 controls the injector 26 so that the injector 26 can inject the fuel at the set timing. This first predetermined time is arbitrary time.

The timing at which the fuel is injected when the rate of change is judged in step S5 of Fig. 2 as falling outside the predetermined range and the opening value is judged in step S11 of Fig. 3 as being increased is shown in each of Cycles 2 to 6 of Fig. 4. It may be learned from Fig. 4 that: as the cycle moves from Cycles 2 to 6, the timing of the fuel injection becomes later by the first predetermined time than the timing of the fuel injection during the closing of the intake valve 36 in a preceding cycle; and accordingly, the timing of the fuel injection is gradually delayed to come closer to the second timing. That is, when the fuel injection is judged to be changed from the fuel economy prioritized condition to the acceleration transition condition, the timing of the fuel injection gradually lags behind the first timing to come closer to the second timing.

Thereby, control is made so that the timing of the fuel injection can be switched to the second timing in order to increase the torque in the case where the driver rotates the throttle grip 14 for the acceleration. This enhances the drivability. In addition, if the timing of the fuel injection switches from the first timing to the second timing at once, the torque to be outputted increases immediately. This makes the driver feel uncomfortable. For this reason, the timing of the fuel injection is gradually delayed. Thereby, the drivability is further increased, and the fuel economy is enhanced. Incidentally, in the case where the fuel injection is judged as being in the acceleration transition condition, the timing of the fuel injection may be set at the second timing instantaneously instead of making the timing of the fuel injection gradually closer to the second timing.

Subsequently, the fuel injection controller 52 judges whether or not the timing set in step S12 is later than the second timing (in step S13). If the fuel injection controller 12 judges in step S13 that the set timing is not later than the second timing, the operation proceeds to step S8 of Fig. 2.

On the other hand, if having judged in step S13 that the set timing is later than the second timing, the fuel injection controller 52 changes the timing of the fuel injection in the current cycle by setting the timing of the fuel injection at the second timing (in step S14), and the operation proceeds to step S8 of Fig. 2. In other words, in the case where the timing obtained by delaying the timing of the fuel injection in the preceding cycle by the first predetermined time is later than the second timing, the timing of the fuel injection in the current cycle is limited to the second timing. If the setting is changed, the fuel injection controller 52 controls the injector 26 so that the injector 26 can inject the fuel at the timing obtained by changing the setting.

On the other hand, if it is judged that there is no increase between the opening values (that there is a decrease) in step S11, or if the timing of the fuel injection in the preceding cycle is judged in step S6 of Fig. 2 as not being the first timing, that is to say, if the fuel injection is judged as being in the fuel economy prioritized condition and the timing of the fuel injection in the preceding cycle is not the first timing, the operation proceeds to step 15. In step 15, the fuel injection controller 52 sets the timing of the fuel injection in the current cycle at a timing obtained by advancing the timing of the fuel injection during the closing of the intake valve 36 in the preceding cycle by second predetermined time. The fuel injection controller 52 controls the injector 26 so that the injector 26 can inject the fuel at the set timing. This second predetermined timing is arbitrary time. Furthermore, the first predetermined time and the second predetermined time may be the same or different.

The timing at which the fuel is injected when the rate of change is judged in step S5 of Fig. 2 as falling within or outside the predetermined range and it is judged in step S11 of Fig. 3 that there is a decrease in the opening values is shown in each of Cycles 7 to 11 of Fig. 4. It may be learned from Fig. 4 that: as the cycle moves from Cycles 7 to 11, the timing of the fuel injection becomes earlier by the second predetermined time than the timing of the fuel injection during the closing of the intake valve 36 in a preceding cycle; and accordingly, the timing of the fuel injection is gradually advanced to come closer to the first timing. That is, when the fuel injection is judged to be changed from the acceleration transition condition to the fuel economy prioritized condition, the timing of the fuel injection gradually advanced to come closer to the first timing.

Thereby, control is made so that the timing of the fuel injection can be switched to the first timing in order to improve the fuel economy in cases such as where the driver rotates the throttle grip 14 for the deceleration and where the driver fixes the throttle grip 14 once rotating the throttle grip 14 for the acceleration. In addition, if the timing of the fuel injection switches to the first timing at once from a timing other than the first timing, the torque to be outputted decreases at a dash. This makes the driver feel uncomfortable. For this reason, the timing of the fuel injection is gradually advanced. Thereby, the drivability is further increased. Incidentally, in the case where the fuel injection is judged as being in the fuel economy prioritized condition, the timing of the fuel injection may be set at the first timing instantaneously instead of making the timing of the fuel injection gradually closer to the first timing.

Subsequently, the fuel injection controller 52 judges whether or not the timing set in step S15 is earlier than the first timing (in step S16). If the fuel injection controller 12 judges in step S16 that the set timing is not earlier than the first timing, the operation proceeds to step S8 of Fig. 2.

On the other hand, if having judged in step S16 that the set timing is earlier than the first timing, the fuel injection controller 52 changes the timing of the fuel injection in the current cycle by setting the timing of the fuel injection at the first timing (in step S17), and the operation proceeds to step S8 of Fig. 2. In other words, in the case where the timing obtained by advancing the timing of the fuel injection in the preceding cycle by the second predetermined time is earlier than the first timing, the timing of the fuel injection in the current cycle is limited to the first timing. If the setting is changed, the fuel injection controller 52 controls the injector 26 so that the injector 26 can inject the fuel at the timing obtained by changing the setting.

As described above, the fuel injection controller 52 judges whether the fuel injection is in the fuel economy prioritized condition or the acceleration transition condition on the basis of the opening values of the throttle valve 20. If the fuel injection is in the fuel economy prioritized condition, the fuel injection controller 52 sets the timing of the fuel injection at the first timing which enables the better fuel economy, and thus controls the timing at which the injector 26 injects the fuel. If the fuel injection is in the acceleration transition condition, the fuel injection controller 52 sets the timing of the fuel injection at the second timing which increases the torque, and thus controls the timing at which the injector 26 injects the fuel. For these reasons, it is possible to achieve the fuel injection which enhances both the fuel economy and the drivability.

In addition, when a switch is made from the fuel economy prioritized condition to the acceleration transition condition, the timing of the fuel injection in the interval of time from the closing of the intake valve 36 to the opening of the intake valve 36 is gradually delayed to make the timing of the fuel injection closer to the second timing. For this reason, it is possible to further enhance the drivability, and to enhance the fuel economy as well.

In addition, when a switch is made from the acceleration transition condition to the fuel economy prioritized condition, the timing of the fuel injection in the interval of time from the closing of the intake valve 36 to the opening of the intake valve 36 is gradually advanced to make the timing of the fuel injection closer to the first timing. For this reason, it is possible to further enhance the drivability.

Moreover, in the case where the throttle valve 20 is open during the opening of the intake valve 36, the torque is inhibited from decreasing, and the drivability is accordingly enhanced because more fuel is injected during the opening of the intake valve 36.

It should be noted that the foregoing embodiment may be modified into the following modes.
(1) In the foregoing embodiment, the fuel is to be injected during the opening of the intake valve 36 once the throttle valve 20 is opened during the opening of the intake valve 36 (in step S10 of Fig. 2) irrespective of whether the fuel injection is in the fuel economy prioritized condition or in the acceleration transition condition. However, the fuel may be injected during the opening of the intake valve 36 once the throttle valve 20 is opened during the opening of the intake valve 36 only in the case where the fuel injection is judged as being in the acceleration transition condition. In other words, in the case where the fuel injection is judged as being in the fuel economy prioritized condition, no fuel is injected even if the throttle valve 20 is opened during the opening of the intake valve 36. Thereby, the fuel economy can be further enhanced in the fuel economy prioritized condition.
(2) In the foregoing embodiment, in the case where it is judged in step S11 of Fig. 3 that there is an increase between the opening values, the timing of the fuel injection in the current cycle is set at the timing obtained by delaying the timing of the fuel injection in the preceding cycle by the first predetermined time (in step S12). However, if it is judged in step S11 of Fig. 3 that there is an increase between the opening values, the fuel injection controller may set the timing of the fuel injection in the current cycle at the first timing and an arbitrary timing during the opening of the intake valve 36 and then the operation may proceed to step S8 of Fig. 2. Thereby, in the case where there is an increase between the opening values (while in the acceleration transition condition), the fuel is injected twice: at the first timing and at the arbitrary timing during the opening of the intake valve. Specifically, because no large torque is produced from the injection of the fuel at the first timing alone, the fuel is additionally injected at the arbitrary timing during the opening of the intake valve 36 for making up for a lack of the torque while in the acceleration transition condition. In this case, if the rate of change is judged in step S5 of Fig. 2 as falling within the predetermined range, the operation proceeds to step S7 by skipping step S6. Furthermore, if it is judged in step S11 of Fig. 3 that there is no increase between the opening values, the operation proceeds to step S7 of Fig. 2.
(3) In the foregoing embodiment, in step S12 of Fig. 3, the time by which the timing of the fuel injection in the preceding cycle is delayed to obtain the timing of the fuel injection in the current cycle is set at the constant time no matter how large the rate of change in the opening values of the throttle valve 20 is. However, the first predetermined time may be changeable, specifically, the first predetermined time may be changed in accordance with the rate of change in the opening values which is calculated in step S4 of Fig. 2. For example, the first predetermined time is set longer when the rate of change in the opening values is large in the increase direction than when the rate of change in the opening values is small in the increase direction. In other words, the time by which the timing of the fuel injection in the current cycle is made to become later than the timing of the fuel injection in the preceding cycle is set longer when the rate of change in the opening values is large in the increase direction than when the rate of change in the opening values is small in the increase direction. Thereby, as the rate of change in the opening values becomes larger in the increase direction, the timing of the fuel injection comes close to the second timing earlier. In the case where the rate of change in the opening values becomes larger in the increase direction, the driver is rotating the throttle grip 14 to increase the acceleration. For this reason, the drivability is further enhanced by changing the first predetermined time in accordance with the rate of change in the opening values.

In addition, in step S15 of Fig. 3, the time by which the timing of the fuel injection in the preceding cycle is advanced to obtain the timing of the fuel injection in the current cycle is set at the constant time no matter how large the rate of change in the opening values of the throttle valve 20 is. However, the second predetermined time may be changeable, specifically, the second predetermined time may be changed in accordance with the rate of change in the opening values which is calculated in step S4 of Fig. 2. For example, the second predetermined time is set longer when the rate of change in the opening values is large in the decrease direction than when the rate of change in the opening values is small in the decrease direction. In other words, the time by which the timing of the fuel injection in the current cycle is made to become earlier than the timing of the fuel injection in the preceding cycle is set longer when the rate of change in the opening values is large in the decrease direction than when the rate of change in the opening values is small in the decrease direction. Thereby, as the rate of change in the opening values becomes larger in the decrease direction, the timing of the fuel injection comes close to the first timing earlier. In the case where the rate of change in the opening values becomes larger in the decrease direction, the driver is rotating the throttle grip 14 to decrease the acceleration. For this reason, the drivability is further enhanced and the fuel economy is improved by changing the second predetermined time in accordance with the rate of change in the opening values.

The foregoing descriptions have been provided for the preferable embodiments of the present invention.

### Main Reference Numerals:

- 10: fuel injection control system
- 12: controller
- 14: throttle grip
- 16: brake lever
- 18: handlebar
- 20: throttle valve
- 22: engine
- 24: combustion chamber
- 26: injector
- 28: ignition plug
- 30: grip opening detecting part
- 32: actuator
- 34: throttle valve opening detecting part
- 36: intake valve
- 38: piston
- 40: cylinder
- 42: exhaust valve
- 44: crankshaft
- 46: crank angle detecting part
- 50: change rate calculator
- 52: fuel injection controller

## Claims

1. A fuel injection control system (10) comprising:
a throttle valve opening detecting part (34) for detecting opening values of a throttle valve (20) for adjusting an amount of air taken into an engine (22);
a fuel injector (26) for injecting fuel into the air taken into the engine (22) through an air intake pipeline;
a crank angle detecting part (46) for detecting a rotational angle value of a crankshaft (44) of the engine (22);
a fuel injection controller (52) for controlling the fuel injector (26) on a basis of the detected opening values of the throttle valve (20) and the detected rotational angle value of the crankshaft (44), wherein
the fuel injection controller (52) is so configured as to:
judge opening and closing states of an intake valve (36), which is provided to the engine (22) and is configured to cyclically open and close, on a basis of the rotational angle value of the crankshaft (44);
judge that fuel injection is in a fuel economy prioritized condition and control the fuel injector (26), thereby the fuel injector (26) injects the fuel at a first timing immediately following the closing of the intake valve (36), in a case where a rate of change in the detected opening values of the throttle valve (20) falls within a predetermined range, or in a case where the rate of change in the opening values thereof falls outside the predetermined range and there is a decrease between the opening values of the throttle valve (20); and
judge that the fuel injection is in an acceleration transition condition and control the fuel injector (26), thereby the fuel injector (26) injects the fuel at a second timing immediately preceding opening of the intake valve (36) instead of the first timing, in a case where the rate of change in the detected opening values of the throttle valve (20) falls outside the predetermined range and there is an increase between the opening values of the throttle valve (20), and
the second timing is a timing later than the first timing in an interval of time from the closing of the intake valve (36) to a subsequent opening of the intake valve (36) and is the timing at which torque of the engine, which is produced by an explosion of an air-fuel mixture, becomes stronger than the first timing,
wherein one cycle is defined as an interval of time covering four steps which include a compression step, a combustion step, an exhaust step, and an intake step of the engine (22),
the system further comprising a change rate calculator (50) for, in each cycle, calculating the rate of change in the opening values of the throttle valve (20) on a basis of the opening values of the throttle valve (20) which are detected by the throttle valve opening detecting part (34).

2. The fuel injection control system (10) according to claim 1, wherein once judging that the fuel injection is switched from the fuel economy prioritized condition to the acceleration transition condition, the fuel injection controller (52) controls the fuel injector (26), thereby causing the timing of the fuel injection in the interval of time from the closing of the intake valve (36) to the opening of the intake valve (36) to be gradually delayed to the second timing.

3. The fuel injection control system (10) according to claim 2, wherein the fuel injection controller (52) gradually delays the timing of the fuel injection in the interval of time from the closing of the intake valve (36) to the opening of the intake valve (36) by extending time by which the timing of the current fuel injection is made later than the timing of the preceding fuel injection in accordance with the rate of change in the opening values of the throttle valve (20).

4. The fuel injection control system (10) according to any one of claims 1 to 3, wherein once judging that the fuel injection returns to the fuel economy prioritized condition from the acceleration transition condition, the fuel injection controller (52) controls the fuel injector (26), thereby causing the timing of the fuel injection in the interval of time from the closing of the intake valve (36) to the opening of the intake valve (36) to be gradually advanced to return to the first timing.

5. The fuel injection control system (10) according to claim 4, wherein the fuel injection controller (52) gradually advances the timing of the fuel injection in the interval of time from the closing of the intake valve (36) to the opening of the intake valve (36) by shortening time by which the timing of the current fuel injection is made earlier than the timing of the preceding fuel injection in accordance with the rate of change in the opening values of the throttle valve (20).

6. The fuel injection control system (10) according to any one of claims 1 to 5, wherein while in the acceleration transition condition, if the fuel injection controller (52) judges during the opening of the intake valve (36) that the throttle valve (20) is in the opening state on a basis of the detected opening values of the throttle valve (20), the fuel injection controller (52) controls the fuel injector (26) so that the fuel injector (26) additionally injects the fuel during the opening of the intake valve (36).

7. The fuel injection control system (10) according to claim 6, wherein the fuel injection controller (52) causes an amount of fuel to be injected during the opening of the intake valve (36), the amount corresponding to a difference between one of two opening values and an opening value which is detected when the throttle valve (20) is judged as being in the opening state, the two opening values including: an opening value which is the largest among the opening values used to calculate the rate of change in the opening values of the throttle valve (20); and an opening value which is detected when the fuel injection is judged as being in the acceleration condition.

8. A program causing a computer to function as a fuel injection controller (52) in a fuel injection control system according to any one of the preceding claims, the program causing the computer as the fuel injection controller (52) to perform the following steps of:
judging opening and closing states of an intake valve (36), which is provided to the engine (22) and configured to cyclically open and close, on a basis of the rotational angle value of the crankshaft (44); and calculating the rate of change in the opening values of the throttle valve (20) on a basis of the opening values of the throttle valve (20) which are detected by the throttle valve opening detecting part (34); and
judging that fuel injection is in a fuel economy prioritized condition and controlling the fuel injector (26), thereby the fuel injector (26) injects the fuel at a first timing immediately following the closing of the intake valve (36), in a case where a rate of change in the detected opening values of the throttle valve (20) falls within a predetermined range, or in a case where the rate of change in the opening values thereof falls outside the predetermined range and there is a decrease between the opening values of the throttle valve (20); and
judging that the fuel injection is in an acceleration transition condition and controlling the fuel injector (26), thereby the fuel injector (26) injects the fuel at a second timing immediately preceding opening of the intake valve (36) instead of the first timing, in a case where the rate of change in the detected opening values of the throttle valve (20) falls outside the predetermined range and there is an increase between the opening values of the throttle valve (20), wherein
the second timing is a timing later than the first timing in an interval of time from the first timing to the opening of the intake valve (36) and is the timing at which torque of the engine, which is produced by an explosion of an air-fuel mixture, becomes stronger than the first timing.

## Patentansprüche

1. Kraftstoffeinspritzsteuerungssystem (10), aufweisend:
ein Drosselventilöffnungsdetektionsteil (34) zum Detektieren von Öffnungswerten eines Drosselventils (20) zum Einstellen einer Menge von einem Motor (22) eingesaugter Luft;
eine Kraftstoffeinspritzvorrichtung (26) zum Einspritzen von Kraftstoff in die über eine Luftansaugrohrleitung von dem Motor (22) eingesaugte Luft;
ein Kurbelwinkelerfassungsteil (46) zum Detektieren eines Drehwinkelwerts einer Kurbelwelle (44) des Motors (22);
eine Kraftstoffeinspritzsteuerung (52) zum Steuern der Kraftstoffeinspritzvorrichtung (26) auf Grundlage der detektierten Öffnungswerte des Drosselventils (20) und des detektierten Drehwinkelwerts der Kurbelwelle (44), wobei
die Kraftstoffeinspritzsteuerung (52) ausgelegt ist zum
Feststellen der Öffnungs- und Schließzustände eines Einlassventils (36), mit dem der Motor (22) versehen ist und das dazu ausgelegt ist, sich auf Grundlage des Drehwinkelwerts der Kurbelwelle (44) zyklisch zu öffnen und zu schließen;
Feststellen, dass das Kraftstoffeinspritzen in einem Zustand mit Priorität auf dem Einsparen von Kraftstoff erfolgt, und Steuern der Kraftstoffeinspritzvorrichtung (26), wodurch die Kraftstoffeinspritzvorrichtung (26) den Kraftstoff zu einem ersten Zeitpunkt, der unmittelbar auf das Schließen des Einlassventils (36) folgt, einspritzt, in einem Fall, wo eine Änderungsrate in den detektierten Öffnungswerten des Drosselventils (20) in einen vorbestimmten Bereich fällt, oder in einem Fall, wo die Änderungsrate in den Öffnungswerten außerhalb des vorbestimmten Bereichs liegt und eine Abnahme zwischen den Öffnungswerten des Drosselventils (20) vorliegt; und
Feststellen, dass das Kraftstoffeinspritzen in einem Beschleunigungsübergangszustand erfolgt, und Steuern der Kraftstoffeinspritzvorrichtung (26), wodurch die Kraftstoffeinspritzvorrichtung (26) den Kraftstoff anstatt zu dem ersten Zeitpunkt zu einem zweiten, dem Öffnen des Einlassventils (36) unmittelbar vorangehenden Zeitpunkt einspritzt, in einem Fall, wo die Änderungsrate in den detektierten Öffnungswerten des Drosselventils (20) außerhalb des vorbestimmten Bereichs liegt und eine Zunahme zwischen den Öffnungswerten des Drosselventils (20) vorliegt; und
der zweite Zeitpunkt ein späterer Zeitpunkt als der erste Zeitpunkt ist, in einem Zeitintervall zwischen dem Schließen des Einlassventils (36) und einem nachfolgenden Öffnen des Einlassventils (36), und derjenige Zeitpunkt ist, zu dem das Drehmoment des Motors, welches von einer Explosion eines Luft-Kraftstoff-Gemischs erzeugt wird, höher wird als zu dem ersten Zeitpunkt,
wobei ein Zyklus als ein Zeitintervall definiert ist, das vier Phasen abdeckt, umfassend eine Kompressionsphase, eine Verbrennungsphase, eine Ausstoßphase und eine Einsaugphase des Motors (22),
wobei das System weiter einen Änderungsratenrechner (50) zum Berechnen der Änderungsrate in den Öffnungswerten des Drosselventils (20) auf Grundlage der Öffnungswerte des Drosselventils (20), welche von dem Drosselventilöffnungserfassungsteil (34) detektiert werden, in jedem Zyklus aufweist.

2. Kraftstoffeinspritzsteuerungssystem (10) nach Anspruch 1, wobei, sobald festgestellt wird, dass die Kraftstoffeinspritzung von dem Zustand mit Priorität auf dem Einsparen von Kraftstoff in den Beschleunigungsübergangszustand wechselt, die Kraftstoffeinspritzsteuerung (52) die Kraftstoffeinspritzvorrichtung (26) steuert, wodurch bewirkt wird, dass der Zeitpunkt des Kraftstoffeinspritzens in dem Zeitintervall vom Schließen des Einlassventils (36) bis zum Öffnen des Einlassventils (36) zu dem zweiten Zeitpunkt hin allmählich nach hinten verlagert wird.

3. Kraftstoffeinspritzsteuerungssystem (10) nach Anspruch 2, wobei die Kraftstoffeinspritzsteuerung (52) den Zeitpunkt des Kraftstoffeinspritzens in dem Zeitintervall vom Schließen des Einlassventils (36) bis zum Öffnen des Einlassventils (36) durch eine Zeitverzögerung allmählich nach hinten verlagert, durch welche der Zeitpunkt des aktuellen Kraftstoffeinspritzens in Übereinstimmung mit der Änderungsrate in den Öffnungswerten des Drosselventils (20) später liegt als der Zeitpunkt des vorhergehenden Kraftstoffeinspritzens.

4. Kraftstoffeinspritzsteuerungssystem (10) nach einem der Ansprüche 1 bis 3, wobei, sobald festgestellt ist, dass das Kraftstoffeinspritzen aus dem Beschleunigungsübergangszustand in den Zustand mit Priorität auf dem Einsparen von Kraftstoff zurückgekehrt ist, die Kraftstoffeinspritzsteuerung (52) die Kraftstoffeinspritzvorrichtung (26) steuert, wodurch bewirkt wird, dass der Zeitpunkt des Kraftstoffeinspritzens in dem Zeitintervall vom Schlie-ßen des Einlassventils (36) bis zum Öffnen des Einlassventils (36) allmählich nach vorne verlagert wird, um zu dem ersten Zeitpunkt zurückzukehren.

5. Kraftstoffeinspritzsteuerungssystem (10) nach Anspruch 4, wobei die Kraftstoffeinspritzsteuerung (52) den Zeitpunkt des Kraftstoffeinspritzens in dem Zeitintervall vom Schließen des Einlassventils (36) bis zum Öffnen des Einlassventils (36) durch eine Zeitstraffung allmählich nach vorne verlagert, durch die der Zeitpunkt des aktuellen Kraftstoffeinspritzens in Übereinstimmung mit der Änderungsrate in den Öffnungswerten des Drosselventils (20) früher gelegt wird als der Zeitpunkt des vorhergehenden Kraftstoffeinspritzens.

6. Kraftstoffeinspritzsteuerungssystem (10) nach einem der Ansprüche 1 bis 5, wobei während des Beschleunigungsübergangszustands dann, wenn die Kraftstoffeinspritzsteuerung (52) während des Öffnens des Einlassventils (36) auf Grundlage der detektierten Öffnungswerte des Drosselventils (20) feststellt, dass das Einlassventil (36) im geöffneten Zustand ist, die Kraftstoffeinspritzsteuerung (52) die Kraftstoffeinspritzvorrichtung (26) steuert, so dass die Kraftstoffeinspritzvorrichtung (26) den Kraftstoff zusätzlich während des Öffnens des Einlassventils (36) einspritzt.

7. Kraftstoffeinspritzsteuerungssystem (10) nach Anspruch 6, wobei die Kraftstoffeinspritzsteuerung (52) bewirkt, dass eine Menge an Kraftstoff während des Öffnens des Einlassventils (36) eingespritzt wird, wobei die Menge einem Unterschied zwischen einem von zwei Öffnungswerten und einem Öffnungswert entspricht, der detektiert wird, wenn festgestellt wird, dass das Drosselventil (20) im Öffnungszustand ist, wobei die zwei Öffnungswerte umfassen: einen Öffnungswert, der der größte unter den Öffnungswerten ist, die zum Berechnen der Änderungsrate in den Öffnungswerten des Drosselventils (20) verwendet wird; und einen Öffnungswert, der detektiert wird, wenn festgestellt wird, dass das Kraftstoffeinspritzen im Beschleunigungszustand ist.

8. Programm, das bewirkt, dass ein Computer als Kraftstoffeinspritzsteuerung (52) in einem Kraftstoffeinspritzsteuerungssystem (10) nach einem der vorangehenden Ansprüche fungiert,
wobei das Programm bewirkt, dass der Computer als Kraftstoffeinspritzsteuerung (52) die folgenden Schritte durchführt:
Feststellen von Öffnungs- und Schließzuständen eines Einlassventils (36), mit dem der Motor (22) versehen ist und das dazu ausgelegt ist, sich auf Grundlage des Drehwinkelwerts der Kurbelwelle (44) zyklisch zu öffnen und zu schließen; und
Berechnen der Änderungsrate in den Öffnungswerten des Drosselventils (20) auf Grundlage der von dem Drosselventilöffnungsdetektionsteil (34) detektierten Öffnungswerte; und
Feststellen, dass das Kraftstoffeinspritzen in einem Zustand mit Priorität auf dem Einsparen von Kraftstoff erfolgt, und
Steuern der Kraftstoffeinspritzvorrichtung (26), wodurch die Kraftstoffeinspritzvorrichtung (26) den Kraftstoff zu einem ersten, unmittelbar auf das Schließen des Einlassventils (36) folgenden Zeitpunkt einspritzt, in einem Fall, wo eine Änderungsrate in den detektierten Öffnungswerten des Drosselventils (20) in einen vorbestimmten Bereich fällt, oder in einem Fall, wo die Änderungsrate in den Öffnungswerten außerhalb des vorbestimmten Bereichs liegt und eine Abnahme zwischen den Öffnungswerten des Drosselventils (20) vorliegt; und
Feststellen, dass das Kraftstoffeinspritzen in einem Beschleunigungsübergangszustand erfolgt, und
Steuern der Kraftstoffeinspritzvorrichtung (26), wodurch die Kraftstoffeinspritzvorrichtung (26) den Kraftstoff anstelle des ersten Zeitpunkts zu einem zweiten Zeitpunkt, der dem Öffnen des Einlassventils (36) unmittelbar vorangeht, einspritzt, in einem Fall, wo die Änderungsrate in den detektierten Öffnungswerten des Drosselventils (20) außerhalb des vorbestimmten Bereichs liegt und eine Zunahme zwischen den Öffnungswerten des Drosselventils (20) vorliegt, wobei
der zweite Zeitpunkt ein späterer Zeitpunkt als der erste Zeitpunkt ist, in einem Zeitintervall von dem ersten Zeitpunkt bis zum Öffnen des Einlassventils (36), und derjenige Zeitpunkt ist, zu dem das Drehmoment des Motors, welches von einer Explosion eines Luft-Kraftstoff-Gemischs erzeugt wird, höher wird als zu dem ersten Zeitpunkt.

## Revendications

1. Système de commande d'injection de carburant (10) comprenant :
une partie de détection d'ouverture de papillon des gaz (34) permettant de détecter des valeurs d'ouverture d'un papillon des gaz (20) pour régler une quantité d'air admis dans un moteur (22) ;
un injecteur de carburant (26) permettant d'injecter un carburant dans l'air admis dans le moteur (22) par le biais d'une canalisation d'admission d'air ;
une partie de détection d'angle de vilebrequin (46) permettant de détecter une valeur d'angle de rotation d'un vilebrequin (44) du moteur (22) ;
un dispositif de commande d'injection de carburant (52) permettant de commander l'injecteur de carburant (26) sur la base des valeurs d'ouverture détectées du papillon des gaz (20) et de la valeur d'angle de rotation détectée du vilebrequin (44), dans lequel
le dispositif de commande d'injection de carburant (52) est configuré de manière à :
juger des états d'ouverture et de fermeture d'une soupape d'admission (36), livrés vers le moteur (22) et configurés pour une ouverture et une fermeture cycliques, sur la base de la valeur d'angle de rotation du vilebrequin (44) ;
juger qu'une injection de carburant se trouve dans un état priorisé d'économie de carburant et commander l'injecteur de carburant (26), moyennant quoi l'injecteur de carburant (26) injecte le carburant à un premier moment prévu suivant immédiatement la fermeture de la soupape d'admission (36) dans un cas dans lequel un taux de changement des valeurs d'ouverture détectées du papillon des gaz (20) tombe dans une plage prédéterminée, ou dans un cas dans lequel le taux de changement des valeurs d'ouverture de celui-ci tombe à l'extérieur de la plage prédéterminée et qu'il existe une réduction entre les valeurs d'ouverture du papillon des gaz (20) ; et
juger que l'injection de carburant se trouve dans un état de transition d'accélération et commander l'injecteur de carburant (26), moyennant quoi l'injecteur de carburant (26) injecte le carburant à un second moment prévu précédant immédiatement l'ouverture de la soupape d'admission (36) au lieu du premier moment prévu dans un cas dans lequel le taux de changement des valeurs d'ouverture détectées du papillon des gaz (20) tombe à l'extérieur de la plage prédéterminée et qu'il existe une augmentation entre les valeurs d'ouverture du papillon des gaz (20), et
le second moment prévu est un moment ultérieur au premier moment prévu dans un intervalle de temps allant de la fermeture de la soupape d'admission (36) à une ouverture suivante de la soupape d'admission (36) et correspond au moment auquel un couple du moteur, qui est produit par une explosion d'un mélange air-carburant, devient plus fort qu'au premier moment prévu,
dans lequel un cycle est défini comme un intervalle de temps couvrant quatre étapes qui comportent une étape de compression, une étape de combustion, une étape d'échappement, et une étape d'admission du moteur (22),
le système comprenant en outre un calculateur de taux de changement (50) pour, dans chaque cycle, calculer le taux de changement des valeurs d'ouverture du papillon des gaz (20) sur la base des valeurs d'ouverture du papillon des gaz (20) qui sont détectées par la partie de détection d'ouverture de papillon des gaz (34).

2. Système de commande d'injection de carburant (10) selon la revendication 1, dans lequel une fois qu'il est jugé que l'injection de carburant est commutée de l'état priorisé d'économie de carburant vers l'état de transition d'accélération, le dispositif de commande d'injection de carburant (52) commande l'injecteur de carburant (26), provoquant ainsi le report progressif vers le second moment prévu du moment de l'injection de carburant dans l'intervalle de temps de la fermeture de la soupape d'admission (36) à l'ouverture de la soupape d'admission (36).

3. Système de commande d'injection de carburant (10) selon la revendication 2, dans lequel le dispositif de commande d'injection de carburant (52) reporte progressivement le moment de l'injection de carburant dans l'intervalle de temps allant de la fermeture de la soupape d'admission (36) à l'ouverture de la soupape d'admission (36) en étendant la durée avant laquelle le moment de l'injection de carburant actuelle est réalisée jusqu'à un moment ultérieur au moment prévu de l'injection de carburant précédente conformément au taux de changement des valeurs d'ouverture du papillon des gaz (20).

4. Système de commande d'injection de carburant (10) selon l'une quelconque des revendications 1 à 3, dans lequel une fois qu'il a été jugé que l'injection de carburant retourne à l'état priorisé d'économie de carburant depuis l'état de transition d'accélération, le dispositif de commande d'injection de carburant (52) commande l'injecteur de carburant (26), provoquant ainsi l'avancement progressif du moment prévu de l'injection de carburant dans l'intervalle de temps allant de la fermeture de la soupape d'admission (36) à l'ouverture de la soupape d'admission (36) pour revenir au premier moment prévu.

5. Système de commande d'injection de carburant (10) selon la revendication 4, dans lequel le dispositif de commande d'injection de carburant (52) avance progressivement le moment prévu de l'injection de carburant dans l'intervalle de temps allant de la fermeture de la soupape d'admission (36) à l'ouverture de la soupape d'admission (36) en raccourcissant la durée avant laquelle l'injection de carburant actuelle est réalisée pour que le moment soit antérieur au moment de l'injection de carburant précédente conformément au taux de changement des valeurs d'ouverture du papillon des gaz (20).

6. Système de commande d'injection de carburant (10) selon l'une quelconque des revendications 1 à 5, dans lequel, lors d'un état de transition d'accélération, si le dispositif de commande d'injection de carburant (52) juge pendant l'ouverture de la soupape d'admission (36) que le papillon des gaz (20) se trouve dans l'état d'ouverture sur la base des valeurs d'ouverture détectées du papillon des gaz (20), le dispositif de commande d'injection de carburant (52) commande l'injecteur de carburant (26) de sorte que l'injecteur de carburant (26) injecte en outre le carburant pendant l'ouverture de la soupape d'admission (36).

7. Système de commande d'injection de carburant (10) selon la revendication 6, dans lequel le dispositif de commande d'injection de carburant (52) provoque l'injection d'une quantité de carburant pendant l'ouverture de la soupape d'admission (36), la quantité correspondant à une différence entre une des deux valeurs d'ouverture et une valeur d'ouverture qui est détectée lorsque le papillon des gaz (20) est jugé comme étant dans l'état d'ouverture, les deux valeurs d'ouverture comportant : une valeur d'ouverture qui est la plus importante parmi les valeurs d'ouverture utilisées pour calculer le taux de changement des valeurs d'ouverture du papillon des gaz (20) ; et une valeur d'ouverture qui est détectée lorsque l'injection de carburant est jugée comme se trouvant dans l'état d'accélération.

8. Programme amenant un ordinateur à fonctionner comme un dispositif de commande d'injection de carburant (52) dans un système de commande d'injection de carburant selon l'une quelconque des revendications précédentes,
le programme amenant l'ordinateur, en tant que dispositif de commande d'injection de carburant (52), à réaliser les étapes suivantes consistant à :
juger des états d'ouverture et de fermeture d'une soupape d'admission (36), livrés vers le moteur (22) et configurés pour une ouverture et une fermeture cycliques, sur la base d'une valeur d'angle de rotation du vilebrequin (44) ; et
calculer le taux de changement des valeurs d'ouverture du papillon des gaz (20) sur la base des valeurs d'ouverture du papillon des gaz (20) qui sont détectées par la partie de détection d'ouverture de papillon des gaz (34) ; et
juger que l'injection de carburant se trouve dans un état priorisé d'économie de carburant et commander l'injecteur de carburant (26), moyennant quoi l'injecteur de carburant (26) injecte le carburant à un premier moment prévu suivant immédiatement la fermeture de la soupape d'admission (36) dans un cas dans lequel un taux de changement des valeurs d'ouverture détectées du papillon des gaz (20) tombe dans une plage prédéterminée, ou dans un cas dans lequel le taux de changement des valeurs d'ouverture de celui-ci tombe à l'extérieur de la plage prédéterminée et qu'il existe une réduction entre les valeurs d'ouverture du papillon des gaz (20) ; et
juger que l'injection de carburant se trouve dans un état de transition d'accélération et commander l'injecteur de carburant (26), moyennant quoi l'injecteur de carburant (26) injecte le carburant à un second moment prévu précédant immédiatement l'ouverture de la soupape d'admission (36) au lieu du premier moment prévu dans un cas dans lequel le taux de changement des valeurs d'ouverture détectées du papillon des gaz (20) tombe à l'extérieur de la plage prédéterminée et qu'il existe une augmentation entre les valeurs d'ouverture du papillon des gaz (20), dans lequel
le second moment prévu est un moment prévu ultérieur au premier moment prévu dans un intervalle de temps allant du premier moment prévu à l'ouverture de la soupape d'admission (36) et correspond au moment prévu auquel un couple du moteur, qui est produit par une explosion du mélange air-carburant, devient plus fort qu'au premier moment prévu.
